# EUROPÄISCHE PATENTSCHRIFT

(11) **EP 3 922 501 B1**
(45) Veröffentlichungstag und Bekanntmachung des Hinweises auf die Patenterteilung: **18.12.2024**
(21) Anmeldenummer: 21172096.6
(22) Anmeldetag: 04.05.2021
(51) Int. Cl.: B60K 35/23, B60K 35/28, B60K 35/29, G08G 1/16

(54) **STEUERUNG EINER ANZEIGE EINER AUGMENTED-REALITY-HEAD-UP-DISPLAY-VORRICHTUNG FÜR EIN FORTBEWEGUNGSMITTEL**
CONTROL OF A DISPLAY OF AN AUGMENTED REALITY HEAD-UP DISPLAY DEVICE FOR A METHOD OF TRANSPORT
COMMANDE D'UN AFFICHAGE D'UN DISPOSITIF D'AFFICHAGE TÊTE HAUTE DE RÉALITÉ AUGMENTÉE POUR UN MOYEN DE DÉPLACEMENT

(30) Priorität: 11.06.2020 DE 102020207314
(43) Veröffentlichungstag der Anmeldung: 15.12.2021
(73) Patentinhaber: VOLKSWAGEN AG, 38440 Wolfsburg (DE)
(72) Erfinder: Kunze, Alexander, 38102 Braunschweig (DE); Tebaibi, Yannis, 38106 Braunschweig (DE)

(56) Entgegenhaltungen:
- DE-A1- 102012 210 145
- DE-A1- 102017 220 268
- DE-A1- 102019 202 113
- US-A1- 2020 005 430

## Beschreibung

Die vorliegende Erfindung betrifft ein Verfahren, ein Computerprogramm mit Instruktionen und eine Vorrichtung zur Steuerung einer Anzeige eines Augmented-Reality-Head-up-Displays für ein Fortbewegungsmittel. Die Erfindung betrifft weiterhin ein Fortbewegungsmittel, in dem ein erfindungsgemäßes Verfahren oder eine erfindungsgemäße Vorrichtung eingesetzt wird.

Mit der stetigen Weiterentwicklung von Virtual und Augmented Reality-Technologien und -Anwendungen finden diese auch Einzug in das Kraftfahrzeug und andere Fortbewegungsmittel. Bei Augmented Reality (AR), auf Deutsch "erweiterte Realität", handelt es sich um die Anreicherung der realen Welt durch virtuelle Elemente, die im dreidimensionalen Raum ortskorrekt registriert sind und eine Echtzeitinteraktion erlauben. Da sich in der Fachwelt im deutschsprachigen Raum der Ausdruck "Augmented Reality" gegenüber dem Ausdruck "erweiterte Realität" durchgesetzt hat, wird im Folgenden ersterer benutzt. Synonym wird auch der Ausdruck "Mixed Reality" verwendet.

Eine mögliche technische Realisierung, um den Fahrerarbeitsplatz entsprechend mit perspektivisch korrekten, kontaktanalogen virtuellen Erweiterungen anzureichern, bietet das Head-up-Display (HUD). Dabei werden die Lichtstrahlen eines im Armaturenbrett verbauten Displays über mehrere Spiegel und Linsen gefaltet und über eine Projektionsfläche in das Auge des Fahrers gespiegelt, sodass dieser ein virtuelles Bild außerhalb des Fahrzeugs wahrnimmt. Als Projektionsfläche dient im Automobilbereich oftmals die Frontscheibe, deren gekrümmte Form bei der Darstellung berücksichtigt werden muss. Als Alternative wird zum Teil auch eine zusätzliche Scheibe aus Glas oder Kunststoff genutzt, die zwischen dem Fahrer und der Frontscheibe auf dem Armaturenbrett angeordnet ist. Durch die optische Überlagerung von Anzeige und Fahrszene sind weniger Kopf- und Augenbewegungen zum Ablesen der Informationen notwendig. Zudem verringert sich der Adaptationsaufwand für die Augen, da abhängig von der virtuellen Distanz der Anzeige weniger bis gar nicht akkommodiert werden muss.

Augmented Reality bietet vielfältige Anwendungsmöglichkeiten zur Unterstützung des Fahrers durch kontaktanaloge Markierung von Fahrbahnen und Objekten. Relativ naheliegende Beispiele beziehen sich meist auf den Bereich der Navigation. Während klassische Navigationsanzeigen in herkömmlichen Head-up-Displays in der Regel schematische Darstellungen anzeigen, z.B. einen rechtwinklig verlaufenden Pfeil nach rechts als Zeichen dafür, dass bei nächster Gelegenheit rechts abgebogen werden soll, bieten AR-Anzeigen wesentlich effektivere Möglichkeiten. Da die Anzeigen als "Teil der Umwelt" dargestellt werden können, können dem Fahrer z.B. sehr effektiv Navigationshinweise oder Gefahrenwarnungen direkt am realen Bezugsort präsentiert werden.

Der Artikel von J. L. Gabbard et al.: "Behind the Glass: Driver Challenges and Opportunities for AR Automotive Applications" [1] untersucht Herausforderungen bei der Integration von Augmented-Reality in Automobilanwendungen. Die Überdeckung fahrrelevanter Informationen der Umgebung, auch als Okklusion bezeichnet, ist einer der Hauptnachteile von kontaktanalogen AR-Anzeigen. Augmented Reality Head-up-Displays stellen Informationen im unmittelbar fahrrelevanten Bereich dar. Demzufolge können jegliche Anzeigen im Head-up-Display kritische Informationen verbergen, beispielsweise ein Hindernis auf der Fahrbahn. Dieser Effekt wird verstärkt durch erhöhten Clutter, d.h. die Anhäufung von Elementen auf kleinem Raum.

In Zusammenhang mit der überlagerten Darstellung von Bildinformationen beschreibt DE 10 2012 020 568 A1 ein Verfahren zum Betreiben einer Navigationseinrichtung eines Kraftwagens. Bei dem Verfahren empfängt eine Anpassungseinrichtung der Navigationseinrichtung ein Signal mindestens eines Messgrößenaufnehmers betreffend eine physikalische oder chemische Eigenschaft oder eine stoffliche Beschaffenheit einer Umgebung des Kraftwagens, die von einem Fahrer des Kraftwagens in der Umgebung optisch wahrnehmbar ist. In Abhängigkeit des Signals wird ein naturgetreues Bild der Umgebung erzeugt, in dem die anhand des Signals erkannte Eigenschaft oder Beschaffenheit der Umgebung wiedergegeben ist. Das naturgetreue Bild der Umgebung wird mit einer Karte der Umgebung kombiniert und eine dadurch erzeugte kombinierte Graphik an eine Anzeigeeinrichtung übermittelt.

DE 10 2017 220 268 A1 beschreibt ein Verfahren zur Erkennung und Visualisierung von Systemunsicherheit bei der Darstellung augmentierter Bildinhalte in Head-Up-Displays. Das Verfahren sieht vor, dass AR-Bildinhalte durch eine Veränderung der Darstellungsform so angepasst werden, dass die vorhandenen Darstellungsungenauigkeiten durch den Beobachter nicht als Fehler wahrgenommen werden. Hierzu wird ein Kennwert ermittelt, der die Systemunsicherheit bei der Darstellung der AR-Bildinhalte quantifiziert. Abhängig von diesem Kennwert erfolgt eine Anpassung der Darstellung auf dem Head-Up-Display.

DE 10 2012 210 145 A1 beschreibt ein Verfahren zur Unterstützung eines Fahrers bei einer Spurführung eines Fahrzeugs auf einer Fahrbahn. Bei dem Verfahren wird ein Bild, das eine Fahrzeugumgebung repräsentiert. Zudem wird ein vom Fahrer eingegebenes Bedienungssignal eingelesen, auf Basis dessen ein im Bild enthaltenes Objekt ausgewählt wird. Auf der Anzeigeeinheit wird daraufhin eine Markierung in einem Bereich angezeigt, der das Objekt repräsentiert. Das Objekt wird nun zur Bestimmung von zumindest einem Längsregelungsparameter für einen von dem Fahrzeug zu befahrenden Fahrweg verwendet, um den Fahrer bei der Spurführung des Fahrzeugs auf der Fahrbahn zu unterstützen.

US 2020/0005430 A1 beschreibt eine Anzeigevorrichtung für ein Fahrzeug. Die Anzeigevorrichtung ermittelt einen Anzeigeort und eine Bewegungsrichtung eines virtuellen Objekts, das in einem Anzeigebereich der Anzeigevorrichtung angezeigt werden soll, um der realen Welt überlagert zu werden, wobei das virtuelle Objekt relativ zur Bewegung des mobilen Objekts bewegt werden soll. Die Anzeigevorrichtung schätzt zudem eine Zeit, die das virtuelle Objekt benötigt, um sich von dem Anzeigeort zu einem Rand des Anzeigebereichs zu bewegen, oder eine Entfernung zwischen dem Anzeigeort des virtuellen Objekts und dem Rand des Anzeigebereichs. Des Weiteren bestimmt die Anzeigevorrichtung eine Anzeigeform des virtuellen Objekts auf der Grundlage der geschätzten Zeit oder der geschätzten Entfernung und bewirkt, dass das virtuelle Objekt in der bestimmten Anzeigeform angezeigt wird, so dass das virtuelle Objekt die Anzeigeform ändert, während es sich in dem Anzeigebereich bewegt.

DE 10 2019 202 113 A1 beschreibt ein Fahrzeugnahbereichssystem. Das Fahrzeugnahbereichssystem verwendet Sensoren, eine Fahrzeugrechenvorrichtung und eine Frontanzeige eines Host-Fahrzeugs, um einem Fahrzeuginsassen, wie etwa dem Fahrer des Host-Fahrzeugs, graphische Nahbereichselemente darzubieten. Die graphischen Nahbereichselemente werden unter Verwendung einer Frontanzeige angezeigt und werden auf eine transparente Fläche des Host-Fahrzeugs, wie etwa die Fenster, die Windschutzscheibe, einen Anzeigebildschirm, Linsen usw. projiziert. Die graphischen Nahbereichselemente geben das Vorhandensein eines Fahrzeugs nahe dem Host-Fahrzeug an.

Es ist eine Aufgabe der Erfindung, Lösungen für die Steuerung einer Anzeige eines Augmented-Reality-Head-up-Displays für ein Fortbewegungsmittel bereitzustellen, die eine Reduzierung der Nachteile ermöglichen, die aus einer Überdeckung fahrrelevanter Informationen resultieren.

Diese Aufgabe wird durch ein Verfahren mit den Merkmalen des Anspruchs 1, durch ein Computerprogramm mit Instruktionen gemäß Anspruch 10 und durch eine Vorrichtung mit den Merkmalen des Anspruchs 11 gelöst. Bevorzugte Ausgestaltungen der Erfindung sind Gegenstand der abhängigen Ansprüche.

Gemäß einem ersten Aspekt der Erfindung umfasst ein Verfahren zur Steuerung einer Anzeige eines Augmented-Reality-Head-up-Displays für ein Fortbewegungsmittel die Schritte:
- Bestimmen zumindest eines sicherheitsrelevanten Parameters, wobei der zumindest eine sicherheitsrelevante Parameter eine Distanz des Fortbewegungsmittels zu einem Zielelement oder eine Zeit bis zur Kollision mit dem Zielelement ist; und
- Anpassen einer Intensität eines durch das Augmented-Reality-Head-up-Display darzustellenden Anzeigeelements, das an der Position des Zielelements senkrecht zur Fahrbahn positioniert ist, in Abhängigkeit von dem zumindest einen sicherheitsrelevanten Parameter, wobei die Intensität mit abnehmender Distanz des Fortbewegungsmittels zum Zielelement oder mit abnehmender Zeit bis zur Kollision mit dem Zielelement reduziert wird, indem eine Opazität des Anzeigeelements eingestellt wird und ein Flächenanteil des Anzeigeelements, der von Bildelementen belegt ist, angepasst wird, wobei die dargestellten Anzeigeelemente auf Konturlinien reduziert werden..

Gemäß einem weiteren Aspekt der Erfindung enthält ein Computerprogramm Instruktionen, die bei Ausführung durch einen Computer den Computer zur Ausführung der folgenden Schritte zur Steuerung einer Anzeige eines Augmented-Reality-Head-up-Displays für ein Fortbewegungsmittel veranlassen:
- Bestimmen zumindest eines sicherheitsrelevanten Parameters, wobei der zumindest eine sicherheitsrelevante Parameter eine Distanz des Fortbewegungsmittels zu einem Zielelement oder eine Zeit bis zur Kollision mit dem Zielelement ist; und
- Anpassen einer Intensität eines durch das Augmented-Reality-Head-up-Display darzustellenden Anzeigeelements, das an der Position des Zielelements senkrecht zur Fahrbahn positioniert ist, in Abhängigkeit von dem zumindest einen sicherheitsrelevanten Parameter, wobei die Intensität mit abnehmender Distanz des Fortbewegungsmittels zum Zielelement oder mit abnehmender Zeit bis zur Kollision mit dem Zielelement reduziert wird, indem eine Opazität des Anzeigeelements eingestellt wird und ein Flächenanteil des Anzeigeelements, der von Bildelementen belegt ist, angepasst wird, wobei die dargestellten Anzeigeelemente auf Konturlinien reduziert werden..

Der Begriff Computer ist dabei breit zu verstehen. Insbesondere umfasst er auch Steuergeräte, eingebettete Systeme und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist eine Vorrichtung zur Steuerung einer Anzeige eines Augmented-Reality-Head-up-Displays für ein Fortbewegungsmittel auf:
- ein Analysemodul zum Bestimmen zumindest eines sicherheitsrelevanten Parameters, wobei der zumindest eine sicherheitsrelevante Parameter eine Distanz des Fortbewegungsmittels zu einem Zielelement oder eine Zeit bis zur Kollision mit dem Zielelement ist; und
- ein Steuerungsmodul zum Anpassen einer Intensität eines durch das Augmented-Reality-Head-up-Display darzustellenden Anzeigeelements, das an der Position des Zielelements senkrecht zur Fahrbahn positioniert ist, in Abhängigkeit von dem zumindest einen sicherheitsrelevanten Parameter, wobei das Steuerungsmodul eingerichtet ist, die Intensität mit abnehmender Distanz des Fortbewegungsmittels zum Zielelement oder mit abnehmender Zeit bis zur Kollision mit dem Zielelement zu reduzieren indem es eine Opazität des Anzeigeelements einstellt und einen Flächenanteil des Anzeigeelements, der von Bildelementen belegt ist, anpasst, wobei es die dargestellten Anzeigeelemente auf Konturlinien reduziert.

Bei der erfindungsgemäßen Lösung erfolgt eine dynamische Verringerung der Okklusion bzw. Verdeckung, welche von Anzeigeelementen ausgeht. In Abhängigkeit von sicherheitskritischen Parametern wird die Intensität des Anzeigeelements verringert. Dazu kann die Opazität des Anzeigeelements eingestellt werden oder ein Flächenanteil des Anzeigeelements, der von Bildelementen belegt ist, angepasst werden. Ohne diese Verringerung der Okklusion würde beispielsweise ein in der Ferne positionierter Abbiegepfeil mit konstant hoher Intensität aufgrund der Augmented-Reality-Darstellung bei Annäherung immer größer werden und somit zu einer kritischen Überdeckung führen.

Zur Vermeidung einer Überdeckung fahrrelevanter Informationen werden erfindungsgemäß die dargestellten Anzeigeelemente auf Konturlinien reduziert.

Gemäß einem Aspekt der Erfindung bleiben Konturlinien des Anzeigeelements unverändert sichtbar. Da die Konturlinien der Anzeigeelemente zu dünn sind, um Umgebungsobjekte zu verdecken, können sie problemlos konstant sichtbar bleiben. Dadurch wird zugleich die durchgängige Sichtbarkeit und Verständlichkeit der durch die Anzeigeelemente vermittelten Informationen gewährleistet.

Des Weiteren könnte die Größe der dargestellten Anzeigeelemente begrenzt werden, sodass ein Anzeigeelement nur bis zu einer gewissen Größe anwachsen kann. Dies unterbindet allerdings den Augmented-Reality-Effekt. Mithilfe der beschriebenen Lösung wird hingegen die durch die Vergrößerung hervorgerufene Erhöhung der Okklusion durch eine Reduzierung der Intensität ausgeglichen. Die Salienz von Anzeigeelementen wird dadurch nur dann reduziert, wenn die Okklusion kritisch bzw. problematisch ist. Eine hinreichende Salienz relativ zur Umgebung ist erforderlich, damit die Anzeigen wahrnehmbar sind. Dadurch ergibt sich ein Kompromiss zwischen Wahrnehmbarkeit und Okklusionsreduktion.

Erfindungsgemäß ist der zumindest eine sicherheitsrelevante Parameter eine Distanz des Fortbewegungsmittels zu einem Zielelement oder eine Zeit bis zur Kollision mit dem Zielelement. Als besonders kritische Situation kann ein kleines, unbewegliches Objekt betrachtet werden, das vom Anzeigeelement verdeckt wird, z.B. ein Kind. Eine solche Situation wird am ehesten in städtischen Umgebungen auftreten. Die Okklusion durch das Anzeigeelement ist am kritischsten, wenn es am größten ist, d.h. wenn der Abstand zwischen dem virtuellen Anzeigeelement und dem Ego-Fahrzeug gering ist. Um einem Fahrer die Möglichkeit zu geben, auf potenziell verdeckte Hindernisse zu reagieren, sollte die Verdeckung unterhalb eines kritischen Abstands reduziert werden. Der kritische Abstand hängt von der Geschwindigkeit des Ego-Fahrzeug ab, wobei als Sicherheitsindikator oftmals die Zeit bis zur Kollision verwendet wird. Für städtische Umgebungen können Werte von 1,5 s für die Zeit bis zur Kollision als akzeptabel betrachtet werden. In manchen Situationen ist es jedoch nicht ausreichend, sich vollständig auf die Betrachtung der Zeit bis zur Kollision zu verlassen. In Situationen mit langsamem Verkehr, z.B. während der Hauptverkehrszeit, könnte es sonst zu einer sehr späten Reduzierung der Okklusion kommen. Daher ist es sinnvoll, wenn die Intensität auch durch die Distanz beeinflusst wird.

Gemäß einem Aspekt der Erfindung eine Größe des Anzeigeelements beim Anpassen der Intensität berücksichtigt. Beispielsweise kann einer Anpassung der Intensität auf Anzeigeelemente beschränkt werden, die eine gewisse Mindestgröße aufweisen, z.B. in Bezug auf Höhe, Breite oder Fläche. Auf diese Weise werden Anzeigeelemente, die ohnehin keine problematische Okklusion verursachen, ausgeklammert. Zudem kann die Größe des Anzeigeelements bei der Bestimmung der Distanz berücksichtigt werden, unterhalb derer eine Anpassung der Intensität erfolgen soll.

Gemäß einem Aspekt der Erfindung werden sowohl die Distanz des Fortbewegungsmittels bis zum Zielelement als auch die Zeit bis zur Kollision mit dem Zielelement bestimmt und der kritischere Parameter wird für das Anpassen der Intensität des Anzeigeelements ausgewählt. Die Einbeziehung des Zeitparameters stellt eine geschwindigkeitsabhängige Okklusionsreduktion sicher. Dadurch kann gewährleistet werden, dass ausreichend Zeit zur Reaktion und zum Bremsen besteht. Beispielsweise kann ein relativ kleines Anzeigeelement bei einer Ego-Geschwindigkeit von 150 km/h ein in der Ferne befindliches Hindernis aufgrund der kontaktanalogen Darstellung verdecken, wodurch bei einer ausschließlich auf der Distanz oder der Größe des Anzeigeelements basierten Lösung keine hinreichende Zeit für Reaktion und Bremsen gewährleistet werden kann. Die zeitabhängige Lösung stellt hingegen sicher, dass Hindernisse nicht verdeckt werden.

Gemäß einem Aspekt der Erfindung ist die Intensität in Abhängigkeit von dem zumindest einen sicherheitsrelevanten Parameter zwischen 100% und 0% einer nominellen Intensität anpassbar. Je nach Ausgestaltung der Anzeigeelemente kann vorgesehen sein, dass ein Anzeigeelement aus mehreren Teilen besteht, die eine unterschiedliche nominelle Intensität haben. Beispielsweise kann ein virtueller Wegweiser aus drei nebeneinander angeordneten Richtungspfeilen mit Intensitäten von 100%, 70% und 50% bestehen. Zur Vereinfachung der Anpassung der Intensität ist es daher zweckmäßig, jeweils eine prozentuale Anpassung der nominellen Intensität zu bestimmen.

Gemäß einem Aspekt der Erfindung wird die Intensität des Anzeigeelements in Abhängigkeit von dem zumindest einen sicherheitsrelevanten Parameter nur reduziert, aber nicht wieder angehoben. Auf diese Weise wird ein Schwanken der Intensität verhindert, z.B. bei starken Bremsvorgängen. Wenn die Intensität des Anzeigeelements in einer gegebenen Situation nur von der Zeit bis zur Kollision beeinflusst wird, würde dies in Fällen, in denen sich ein Fahrer schnell einer Kreuzung nähert, dann aber langsamer wird, zu einer Fluktuation führen, da die Zeit bis zur Kollision wieder ansteigt. Daher wird die Intensität zumindest durch die Zeit bis zur Kollision nur unidirektional, d.h. nur abnehmend, beeinflusst. Steigt die Zeit bis zur Kollision nach einer Abnahme wieder an, bleibt die Intensität auf dem bisherigen Niveau und nimmt erst dann wieder ab, wenn die Zeit bis zur Kollision unter den vorherigen niedrigeren Wert fällt.

Gemäß einem Aspekt der Erfindung sind Funktionen für das Anpassen der Intensität des Anzeigeelements in Abhängigkeit von dem zumindest einen sicherheitsrelevanten Parameter anpassbar. Beispielsweise können die Funktionen auf Basis der Größe des Anzeigeelements angepasst werden. z.B. um die Distanz festzulegen, unterhalb derer eine Anpassung der Intensität erfolgen soll. Ebenso können die Funktionen durch einen Nutzer des Fortbewegungsmittels anpassbar sein, der so die Darstellung der Anzeigeelemente an seine persönlichen Vorlieben anpassen kann. Weiterhin besteht die Möglichkeit, dass die Funktionen durch den Hersteller des Fortbewegungsmittels oder des Augmented-Reality-Head-up-Displays anpassbar sind. Dieser kann so auf geänderte Vorschriften oder Ergebnisse der Verkehrsforschung reagieren.

Gemäß einem Aspekt der Erfindung ist das Anzeigeelement ein Navigationshinweis oder ein Warnhinweis. Da diese Arten von Anzeigeelementen besonders häufig in kontaktanaloger Darstellung verwendet werden, bietet sich eine Anwendung der erfindungsgemäßen Lösung für derartige Anzeigeelemente an.

Gemäß einem Aspekt der Erfindung ist das Zielelement ein Hindernis oder eine Kreuzung. Im Falle von Navigationshinweisen handelt es sich beim Zielelement in der Regel um eine Kreuzung, auf der der Navigationshinweis platziert ist. Warnhinweise werden hingegen oftmals für Hindernisse genutzt, z.B. Gegenstände, andere Verkehrsteilnehmer oder Straßenschäden.

Besonders vorteilhaft wird ein erfindungsgemäßes Verfahren oder eine erfindungsgemäße Vorrichtung in einem (teil-)autonom oder manuell gesteuerten Fortbewegungsmittel eingesetzt. Bei dem Fortbewegungsmittel kann es sich insbesondere um ein Kraftfahrzeug handeln, aber auch um ein Schiff, ein Fluggerät, z.B. einen Volocopter, etc.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch ein Verfahren zur Steuerung einer Anzeige eines Augmented-Reality-Head-up-Displays für ein Fortbewegungsmittel;
- Fig. 2: zeigt eine erste Ausführungsform einer Vorrichtung zur Steuerung einer Anzeige eines Augmented-Reality-Head-up-Displays für ein Fortbewegungsmittel;
- Fig. 3: zeigt eine zweite Ausführungsform einer Vorrichtung zur Steuerung einer Anzeige eines Augmented-Reality-Head-up-Displays für ein Fortbewegungsmittel;
- Fig. 4: stellt schematisch ein Fortbewegungsmittel dar, in dem eine erfindungsgemäße Lösung realisiert ist;
- Fig. 5: zeigt schematisch einen allgemeinen Aufbau eines Augmented-Reality-Head-up-Displays für ein Fortbewegungsmittel;
- Fig. 6: zeigt schematisch ein erstes Ausführungsbeispiel eines Anzeigeelements in großer Entfernung von einem Fortbewegungsmittel;
- Fig. 7: zeigt schematisch ein erstes Ausführungsbeispiel eines Anzeigeelements in geringer Entfernung von einem Fortbewegungsmittel;
- Fig. 8: zeigt schematisch ein zweites Ausführungsbeispiel eines Anzeigeelements in großer Entfernung von einem Fortbewegungsmittel;
- Fig. 9: zeigt schematisch ein zweites Ausführungsbeispiel eines Anzeigeelements in geringer Entfernung von einem Fortbewegungsmittel;
- Fig. 10: zeigt schematisch einen Funktionsgraphen der Abhängigkeit einer Intensität eines Anzeigeelements von einer Zeit bis zur Kollision mit einem Zielelement; und
- Fig. 11: zeigt schematisch einen Funktionsgraphen der Abhängigkeit einer Intensität eines Anzeigeelements von einer Distanz zu einem Zielelement.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

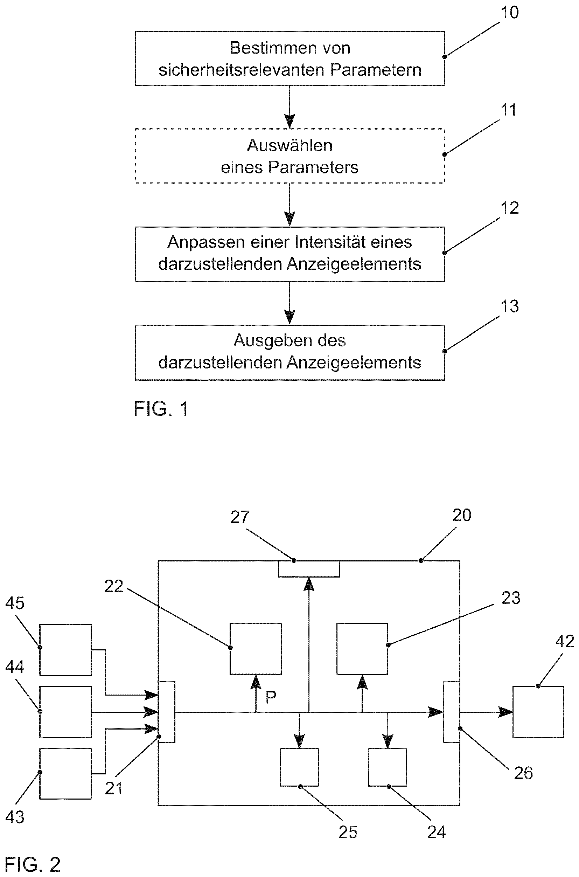

Fig. 1 zeigt schematisch ein Verfahren zur Steuerung einer Anzeige eines Augmented-Reality-Head-up-Displays für ein Fortbewegungsmittel. In einem ersten Schritt wird zumindest ein sicherheitsrelevanter Parameter bestimmt 10. Bei dem sicherheitsrelevanten Parameter handelt es sich um eine Distanz des Fortbewegungsmittels zu einem Zielelement oder eine Zeit bis zur Kollision mit dem Zielelement. Das Zielelement kann beispielsweise ein Hindernis oder eine Kreuzung sein. Für den Fall, dass zwei oder mehr sicherheitsrelevante Parameter bestimmt werden 10, kann optional einer der bestimmten Parameter als kritischerer Parameter ausgewählt werden 11. Anschließend wird eine Intensität eines durch das Augmented-Reality-Head-up-Display an der Position des Zielelements senkrecht zur Fahrbahn positioniert darzustellenden Anzeigeelements, z.B. eines Navigationshinweises oder eines Warnhinweises, in Abhängigkeit von dem zumindest einen sicherheitsrelevanten Parameter angepasst 12, wobei auch eine Größe des Anzeigeelements berücksichtigt werden kann. Dabei wird die Intensität mit abnehmender Distanz des Fortbewegungsmittels zum Zielelement oder mit abnehmender Zeit bis zur Kollision mit dem Zielelement reduziert. Dazu kann die Opazität des Anzeigeelements eingestellt werden oder ein Flächenanteil des Anzeigeelements, der von Bildelementen belegt ist, angepasst werden. Die dazu verwendeten Funktionen können anpassbar sein, z.B. durch einen Nutzer oder durch den Hersteller des Fortbewegungsmittels. Vorteilhaft ist die Intensität zwischen 100% und 0% einer nominellen Intensität anpassbar. Konturlinien des Anzeigeelements bleiben dabei vorzugsweise unverändert sichtbar. Vorteilhaft wird die Intensität nur reduziert, aber nicht wieder angehoben. Schließlich wird das darzustellende Anzeigeelement zur Anzeige durch das Augmented-Reality-Head-up-Display ausgegeben 13.

Fig. 2 zeigt eine vereinfachte schematische Darstellung einer ersten Ausführungsform einer Vorrichtung 20 zur Steuerung einer Anzeige eines Augmented-Reality-Head-up-Displays für ein Fortbewegungsmittel. Die Vorrichtung 20 hat einen Eingang 21, über den Informationen empfangen werden, aus denen ein Analysemodul 22 zumindest einen sicherheitsrelevanten Parameter P bestimmt. Beispielsweise handelt es sich bei den Informationen um Bilddaten einer Kamera 43, Daten eines Sensorsystems 44 oder Daten eines Navigationssystems 45. Das Sensorsystem 44 kann beispielsweise einen Laserscanner oder eine Stereokamera zum Detektieren von Objekten in einer Umgebung des Fortbewegungsmittels aufweisen. Ebenso ist es möglich, dass über den Eingang 21 unmittelbar ein sicherheitsrelevanter Parameter empfangen wird, der zuvor von einer externen Komponente bestimmt wurde. Bei dem sicherheitsrelevanten Parameter P handelt es sich um eine Distanz des Fortbewegungsmittels zu einem Zielelement oder eine Zeit bis zur Kollision mit dem Zielelement. Das Zielelement kann beispielsweise ein Hindernis oder eine Kreuzung sein. Für den Fall, dass durch das Analysemodul 22 zwei oder mehr sicherheitsrelevante Parameter bestimmt werden, kann optional vom Analysemodul 22 einer der bestimmten Parameter als kritischerer Parameter ausgewählt werden. Ein Steuerungsmodul 23 ist dazu eingerichtet, eine Intensität eines durch das Augmented-Reality-Head-up-Display an der Position des Zielelements senkrecht zur Fahrbahn positioniert darzustellenden Anzeigeelements, z.B. eines Navigationshinweises oder eines Warnhinweises, in Abhängigkeit von dem zumindest einen sicherheitsrelevanten Parameter P anzupassen, wobei auch eine Größe des Anzeigeelements berücksichtigt werden kann. Dabei wird die Intensität mit abnehmender Distanz des Fortbewegungsmittels zum Zielelement oder mit abnehmender Zeit bis zur Kollision mit dem Zielelement reduziert. Dazu kann die Opazität des Anzeigeelements eingestellt werden oder ein Flächenanteil des Anzeigeelements, der von Bildelementen belegt ist, angepasst werden. Die dazu verwendeten Funktionen können anpassbar sein, z.B. durch einen Nutzer oder durch den Hersteller des Fortbewegungsmittels. Vorteilhaft ist die Intensität zwischen 100% und 0% einer nominellen Intensität anpassbar. Konturlinien des Anzeigeelements bleiben dabei vorzugsweise unverändert sichtbar. Vorteilhaft wird die Intensität nur reduziert, aber nicht wieder angehoben. Über einen Ausgang 26 der Vorrichtung 20 kann das darzustellende Anzeigeelement zur Anzeige durch das Augmented-Reality-Head-up-Display ausgegeben werden, z.B. in Form von Bilddaten oder in Form von Steuerungssignale für ein Steuergerät 42 des Augmented-Reality-Head-up-Displays.

Das Analysemodul 22 und das Steuerungsmodul 23 können von einem Kontrollmodul 24 gesteuert werden. Über eine Benutzerschnittstelle 27 können gegebenenfalls Einstellungen des Analysemoduls 22, des Steuerungsmoduls 23 oder des Kontrollmoduls 24 geändert werden. Die in der Vorrichtung 20 anfallenden Daten können bei Bedarf in einem Speicher 25 der Vorrichtung 20 abgelegt werden, beispielsweise für eine spätere Auswertung oder für eine Nutzung durch die Komponenten der Vorrichtung 20. Das Analysemodul 22, das Steuerungsmodul 23 sowie das Kontrollmodul 24 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer CPU oder einer GPU. Der Eingang 21 und der Ausgang 26 können als getrennte Schnittstellen oder als eine kombinierte bidirektionale Schnittstelle implementiert sein. Im beschriebenen Beispiel ist die Vorrichtung 20 eine eigenständige Komponente. Sie kann aber ebenso im Steuergerät 42 der Augmented-Reality-Head-up-Display-Vorrichtung integriert sein.

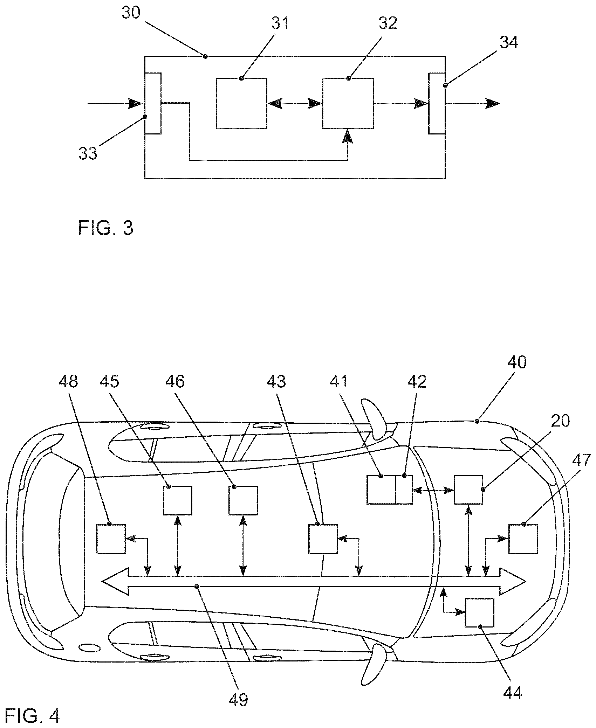

Fig. 3 zeigt eine vereinfachte schematische Darstellung einer zweiten Ausführungsform einer Vorrichtung 30 zur Steuerung einer Anzeige eines Augmented-Reality-Head-up-Displays für ein Fortbewegungsmittel. Die Vorrichtung 30 weist einen Prozessor 32 und einen Speicher 31 auf. Beispielsweise handelt es sich bei der Vorrichtung 30 um einen Computer oder ein Steuergerät.

Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, beispielsweise von Navigationsdaten oder Daten zu einer Umgebung des Fortbewegungsmittels. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 25, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Nachfolgend soll eine bevorzugte Ausführungsform der Erfindung anhand von Fig. 4 bis Fig. 11 beschrieben werden. Bei dieser Ausführungsform ist das Augmented-Reality-Head-up-Display in einem Kraftfahrzeug verbaut. Selbstverständlich beschränkt sich die erfindungsgemäße Lösung nicht auf diese Anwendung. Das Augmented-Reality-Head-up-Display kann ebenso in anderen Arten von Fortbewegungsmitteln verbaut sein.

Fig. 4 stellt schematisch ein Fortbewegungsmittel 40 dar, in dem eine erfindungsgemäße Lösung realisiert ist. Bei dem Fortbewegungsmittel 40 handelt es sich in diesem Beispiel um ein Kraftfahrzeug. Das Kraftfahrzeug weist ein Augmented-Reality-Head-up-Display 41 mit einem zugehörigen Steuergerät 42 auf. Weiterhin weist das Kraftfahrzeug eine Vorrichtung 20 zur Steuerung einer Anzeige des Augmented-Reality-Head-up-Displays 41 auf. Die Vorrichtung 20 kann natürlich auch in das Augmented-Reality-Head-up-Display 41 oder in das Steuergerät 42 des Augmented-Reality-Head-up-Displays 41 integriert sein. Weitere Komponenten des Kraftfahrzeugs sind eine Kamera 43 und ein Sensorsystem 44 zur Erfassung von Objekten, ein Navigationssystem 45, eine Datenübertragungseinheit 46 sowie eine Reihe von Assistenzsystemen 47, von denen eines exemplarisch dargestellt ist. Mittels der Datenübertragungseinheit 46 kann eine Verbindung zu Dienstanbietern aufgebaut werden, beispielsweise zum Abrufen von Kartendaten. Zur Speicherung von Daten ist ein Speicher 48 vorhanden. Der Datenaustausch zwischen den verschiedenen Komponenten des Kraftfahrzeugs erfolgt über ein Netzwerk 49.

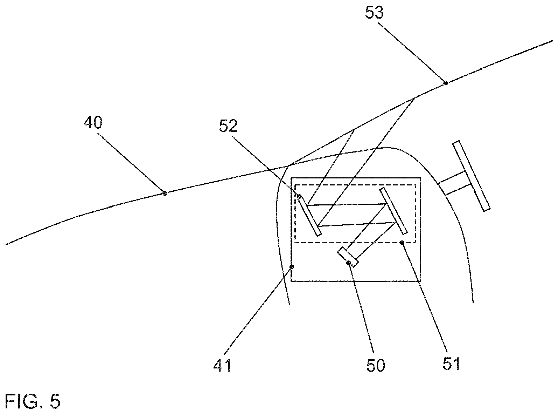

Fig. 5 zeigt schematisch ein Augmented-Reality-Head-up-Display 41 für ein Fortbewegungsmittel 40, in diesem Fall ein Kraftfahrzeug, mit dessen Hilfe Inhalte auf einer Projektionsfläche 53 des Fortbewegungsmittels 40 angezeigt werden können, beispielsweise auf der Frontscheibe oder auf einer zusätzlichen Scheibe aus Glas oder Kunststoff, die zwischen dem Fahrer und der Frontscheibe auf dem Armaturenbrett angeordnet ist. Die dargestellten Inhalte werden durch eine bildgebende Einheit 50 erzeugt und mit Hilfe eines optischen Moduls 51 auf die Projektionsfläche 53 projiziert. Bei einem Kraftfahrzeug erfolgt die Projektion dabei typischerweise in einen Bereich der Frontscheibe oberhalb des Lenkrades. Mittels einer optischen Komponente 52 des optischen Moduls 51 kann die Position einer Eyebox des Augmented-Reality-Head-up-Displays 41 angepasst werden. Die bildgebende Einheit 50 kann beispielsweise ein LCD-TFT-Display sein. Das Augmented-Reality-Head-up-Display 41 ist in der Regel in einem Armaturenbrett des Kraftfahrzeugs verbaut.

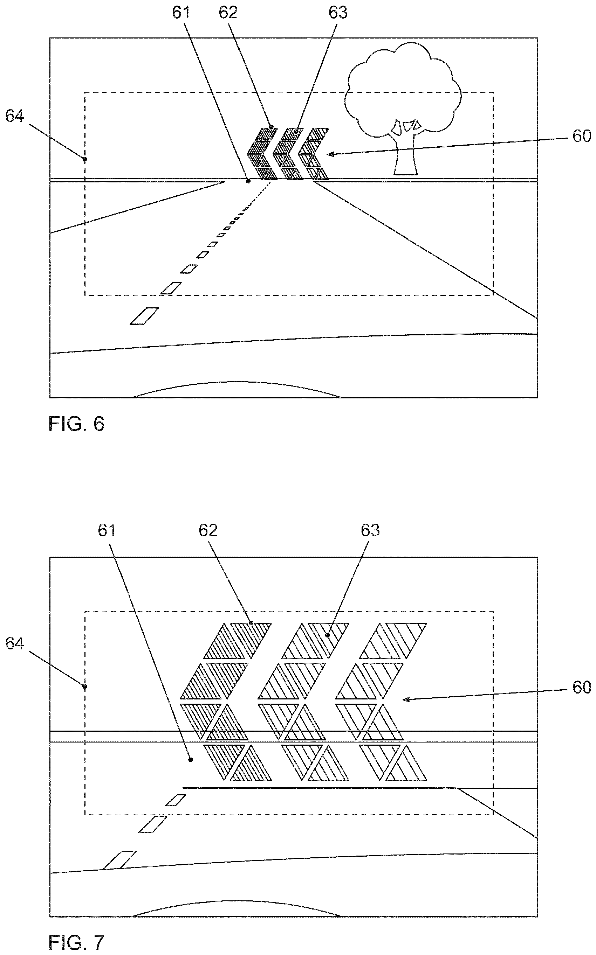

Fig. 6 zeigt schematisch ein erstes Ausführungsbeispiel eines Anzeigeelements 60 in großer Entfernung von einem Fortbewegungsmittel. Das Anzeigeelement 60 ist in diesem Ausführungsbeispiel ein in der Umgebung platzierter Wegweiser, der in einem Sichtfeld 64 (FOV: Field of View) eines Augmented-Reality-Head-up-Displays angezeigt wird. Dieser Wegweiser wird an der Position des Zielelements 61 senkrecht zur Fahrbahn positioniert und besteht aus drei nebeneinander positionierten Pfeilelementen, welche in die Richtung des Manövers zeigen. Das Zieleelement 61 ist hier die Kreuzung, an der das Manöver stattfinden soll. Im dargestellten Beispiel besteht jedes Pfeilelement seinerseits aus einzelnen Bildelementen 63, hier aus vollständig gefüllten Dreiecken. Die Dreiecke des linken Pfeilelements, das am nächsten zur Zielstraße liegt, hat eine Intensität von 100%. Das mittlere Pfeilelement hat eine Intensität von 70% und das rechte Pfeilelement eine Intensität von 50%. Die einzelnen Dreiecke werden jeweils von einer Konturlinie 62 begrenzt. Die unterschiedlichen Intensitäten der gefüllten Dreiecke sind durch die Verwendung unterschiedlicher Schraffuren angedeutet. Die Intensitäten sind bei dieser Ausführungsform durch die Opazität der Füllung bedingt.

Fig. 7 zeigt schematisch ein erstes Ausführungsbeispiel eines Anzeigeelements 60 in geringer Entfernung von einem Fortbewegungsmittel. Bei dem Anzeigeelement 60 handelt es sich wiederum um den schon in Fig. 6 dargestellten Wegweiser. Analog zu realen Objekten vergrößert sich der Wegweiser bzw. vergrößern sich die Pfeilelemente bei Annäherung, wodurch der gewünschte Eindruck eines in der Umgebung platzierten Objekts entsteht. Dies kann zu einer erheblichen Verdeckung der Fahrszene führen, was potentiell gefährliche Situationen, insbesondere für Fußgänger, verursachen kann. Darüber hinaus besteht die Möglichkeit, dass die durch den zunehmend größer werdenden Wegweiser hervorgerufene Lichtstärke zu einem gewissen Zeitpunkt einen im Rahmen einer Betrachtung der funktionalen Sicherheit festgelegten Schwellwert überschreitet. Dies könnte zu einer vollständigen Deaktivierung des Augmented-Reality-Head-up-Displays führen. In Abhängigkeit von sicherheitsrelevanten Parametern wird daher die Intensität der gefüllten Dreiecke angepasst, d.h. die Opazität reduziert, was wiederum durch die Schraffur angedeutet ist. Die Konturlinien 62 des Anzeigeelements 60 bleiben dabei konstant sichtbar, da diese einerseits zu dünn sind, um Umgebungsobjekte zu verdecken, und andererseits die durchgängige Sichtbarkeit und Verständlichkeit der Abbiegeinformation gewährleisten. Um unerwünschte Nebeneffekte zu vermeiden und die Sichtbarkeit und Interpretierbarkeit der Pfeilelemente zu verbessern kann es sinnvoll sein, eine größere nominelle Intensität der Pfeilelemente und einen spitzeren Winkel zu wählen, als dies bei bisherigen Anwendungen der Fall ist, die derartige Wegweiser nutzen.

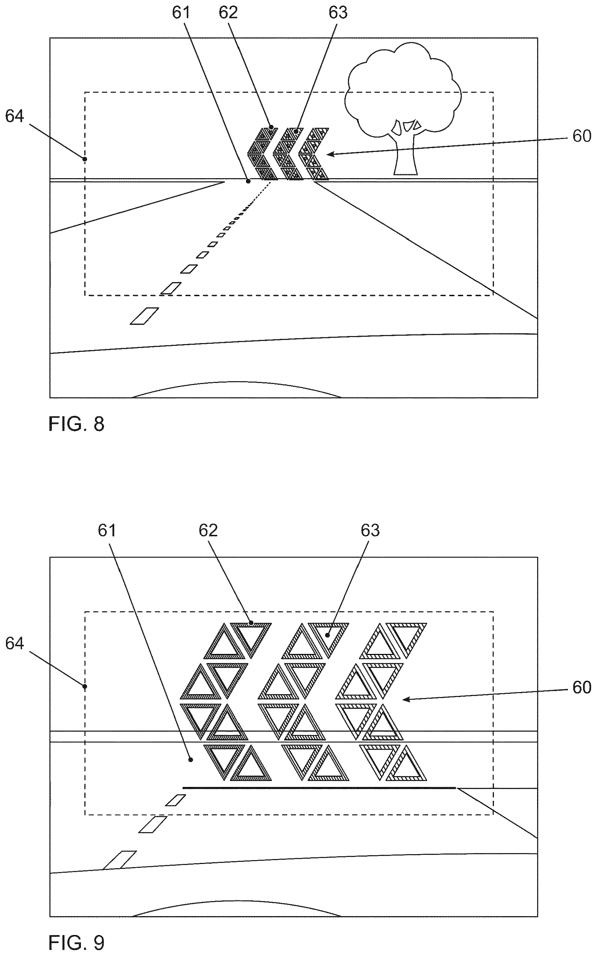

Fig. 8 zeigt schematisch ein zweites Ausführungsbeispiel eines Anzeigeelements 60 in großer Entfernung von einem Fortbewegungsmittel. Bei dem Anzeigeelement 60 handelt es sich wiederum um einen in einem Sichtfeld 64 eines Augmented-Reality-Head-up-Displays angezeigten Wegweiser, der aus drei nebeneinander positionierten Pfeilelementen besteht, welche in die Richtung des Manövers zeigen. Im dargestellten Beispiel besteht jedes Pfeilelement seinerseits aus einzelnen Bildelementen 63, hier aus teilweise gefüllten Dreiecken. Die Dreiecke des linken Pfeilelements, das am nächsten zur Zielstraße liegt, hat eine Intensität von 100%. Das mittlere Pfeilelement hat eine Intensität von 70% und das rechte Pfeilelement eine Intensität von 50%. Die einzelnen Dreiecke werden jeweils von einer Konturlinie 62 begrenzt. Die unterschiedlichen Intensitäten sind bei dieser Ausführungsform durch den Flächenanteil des Anzeigeelements 60 bedingt, der von den Bildelementen 63 belegt ist.

Fig. 9 zeigt schematisch ein zweites Ausführungsbeispiel eines Anzeigeelements 60 in geringer Entfernung von einem Fortbewegungsmittel. Bei dem Anzeigeelement 60 handelt es sich wiederum um den schon in Fig. 8 dargestellten Wegweiser. Um gefährliche Situationen, die aus der Vergrößerung des Wegweisers bei Annäherung und der damit einhergehenden zunehmenden Okklusion resultieren können, wird auch bei dieser Ausführungsform die Intensität der Dreiecke in Abhängigkeit von sicherheitsrelevanten Parametern angepasst. In diesem Fall wird allerdings der Flächenanteil des Anzeigeelements 60, der von den Bildelementen 63 belegt ist, reduziert. Die Opazität des gefüllten Anteil der einzelnen Dreiecke bleibt dabei unverändert. Selbstverständlich besteht aber auch die Möglichkeit, beide Ansätze zu kombinieren, d.h. zusätzlich auch die Opazität anzupassen.

Die Intensität der einzelnen Dreiecke wird vorzugsweise als Funktion von sowohl der Distanz zwischen dem Ego-Fahrzeug und dem Zielelement, d.h. der Position des virtuellen Wegweisers, als auch von der Zeit bis zur Kollision mit dem virtuellen Wegweiser reduziert. Die Anpassung der Intensität kann beispielsweise gemäß der folgenden Logik erfolgen:

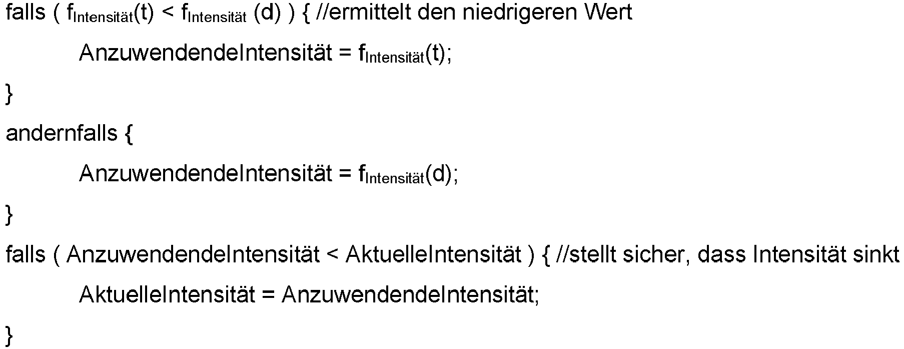

Dabei beschreibt f_{Intensität}(t) die Intensität in Abhängigkeit von der Zeit bis zur Kollision mit dem Zielelement und f_{Intensität} (d) die Intensität in Abhängigkeit von der Distanz zwischen dem Ego-Fahrzeug und dem Zielelement. Aktuellelntensität ist die aktuell für die Darstellung der einzelnen Dreiecke genutzte Intensität.

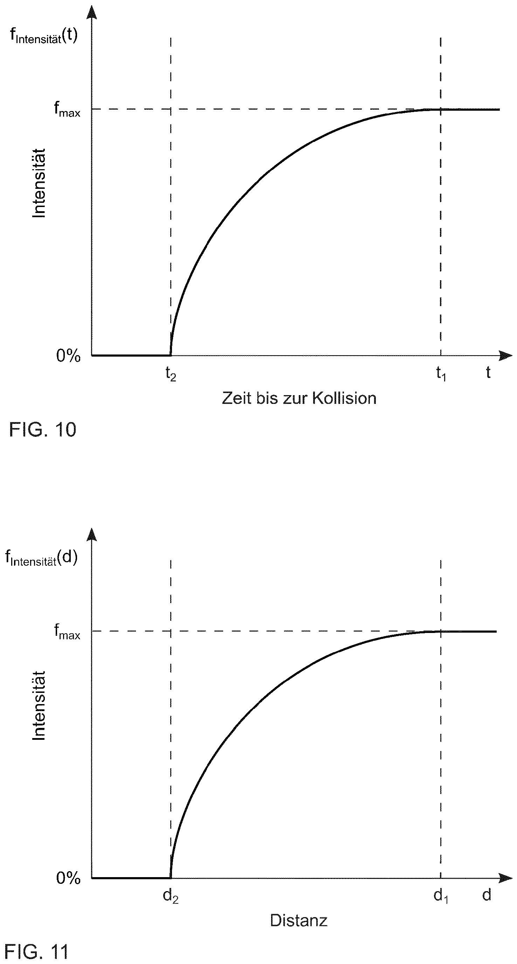

Fig. 10 zeigt schematisch einen Funktionsgraphen der Abhängigkeit der Intensität des Anzeigeelements von der Zeit t bis zur Kollision mit dem Zielelement. Für städtische Umgebungen können Werte von 1,5 s für die Zeit bis zur Kollision als akzeptabel betrachtet werden. Dementsprechend wird die Intensität zwischen einem ersten Zweitwert t₁, z.B. t₁=3,83 s, und einem zweiten Zeitwert t₂, z.B. t₂=1,50 s, von einem Maximalwert fₘₐₓ sukzessive auf 0% reduziert. Für den Fall, dass das Anzeigeelement aus mehreren Elementen mit verschiedenen nominellen Intensitäten besteht, wie z.B. die drei Pfeile des oben beschriebenen Wegweisers, kann für jedes der Elemente ein anderer Maximalwert fₘₐₓ vorgesehen sein. Alternativ kann ein einziger Maximalwert fₘₐₓ verwendet werden. Dieser kann dann beispielsweise für jedes der Elemente mit einem Korrekturfaktor entsprechend der nominellen Intensität multipliziert werden. Vorzugsweise ist der Funktionsgraph anpassbar, insbesondere hinsichtlich der Zeiten t₁ und t₂. Zudem kann auch der Verlauf der Kurve zwischen den beiden Zeitpunkten anpassbar sein.

Fig. 11 zeigt schematisch einen Funktionsgraphen der Abhängigkeit einer Intensität eines Anzeigeelements von einer Distanz d zu einem Zielelement. Beispielsweise kann die Intensität zwischen einer ersten Distanz d₁, z.B. d₁=12,7 m, und einer zweiten Distanz d₂, z.B. d₂=5 m, von einem Maximalwert fₘₐₓ sukzessive auf 0% reduziert werden. Die Variable d₂ kann dabei definiert sein als diejenige Distanz, bei der das Anzeigeelement eine Höhe erreicht, die 65% der Hohe des Sichtfeldes entspricht, bei der das Anzeigeelement also eine kritische Größe mit Okklusionscharakter erreicht. Die Distanz d₂ hängt in diesem Fall von der konkreten Ausgestaltung des Anzeigeelements ab. Die Variable d1 kann in Abhängigkeit von d2 definiert sein, z.B. in der Form d₁=d₂+7,7 m. Vorzugsweise ist der Funktionsgraph anpassbar, insbesondere hinsichtlich der Distanzen d₁ und d₂. Zudem kann auch der Verlauf der Kurve zwischen den beiden Zeitpunkten anpassbar sein.

Bei langsamen Geschwindigkeiten kann es vorkommen, dass die Zeit bis zur Kollision größer ist als t₁, was zu einer Intensität von fₘₐₓ führt, wohingegen die Distanz bereits kleiner ist als d₂, was zu einer Intensität von 0% führt. In solchen Fällen ist immer der kritischere Parameter zu wählen, in diesem Fall die Distanz. Demzufolge wird die Intensität auf 0% gesetzt.

Die Umrisse bzw. Konturlinien des Anzeigeelements bzw. der Bildelemente, aus denen das Anzeigeelement zusammengesetzt ist, bleiben vorzugsweise bei einer Opazität von 100%, bis das gesamte Anzeigeelement ausgeblendet wird. Beispielsweise kann das gesamte Anzeigeelement mit einer Animationsdauer von 500 ms ausgeblendet werden, sobald das Anzeigeelement seine maximale Größe erreicht hat. Die Höhe des Anzeigeelements darf die Höhe des Sichtfeldes nicht überschreiten. Ebenso darf der Begrenzungskasten um die einzelnen Elemente des Anzeigeelements, z.B. die drei Pfeile des oben beschriebenen Wegweisers, die Breite des Sichtfeldes nicht überschreiten. Sowohl die Entfernung, bei welcher die Maximalgröße erreicht wird, als auch die Dauer der Animation sind vorzugsweise anpassbar.

### Referenzen

[1] J. L. Gabbard et al.: "Behind the Glass: Driver Challenges and Opportunities for AR Automotive Applications", Proceedings of the IEEE, Vol. 102 (2014), S. 124-136.

### Bezugszeichenliste

- 10: Bestimmen von sicherheitsrelevanten Parametern
- 11: Auswählen eines Parameters
- 12: Anpassen einer Intensität eines darzustellenden Anzeigeelements
- 13: Ausgeben des darzustellenden Anzeigeelements
- 20: Vorrichtung
- 21: Eingang
- 22: Analysemodul
- 23: Steuerungsmodul
- 24: Kontrollmodul
- 25: Speicher
- 26: Ausgang
- 27: Benutzerschnittstelle
- 30: Vorrichtung
- 31: Speicher
- 32: Prozessor
- 33: Eingang
- 34: Ausgang
- 40: Fortbewegungsmittel
- 41: Augmented-Reality-Head-up-Display
- 42: Steuergerät des Augmented-Reality-Head-up-Displays
- 43: Kamera
- 44: Sensorsystem
- 45: Navigationssystem
- 46: Datenübertragungseinheit
- 47: Assistenzsystem
- 48: Speicher
- 49: Netzwerk
- 50: Bildgebende Einheit
- 51: Optisches Modul
- 52: Optische Komponente
- 53: Projektionsfläche
- 60: Anzeigeelement
- 61: Zielelement
- 62: Konturlinie
- 63: Bildelement
- 64: Sichtfeld
- d: Distanz
- P: Parameter
- t: Zeit

## Patentansprüche

1. Verfahren zur Steuerung einer Anzeige eines Augmented-Reality-Head-up-Displays (41) für ein Fortbewegungsmittel (40), mit den Schritten:
- Bestimmen (10) zumindest eines sicherheitsrelevanten Parameters (P), wobei der zumindest eine sicherheitsrelevante Parameter (P) eine Distanz (d) des Fortbewegungsmittels (40) zu einem Zielelement (61) oder eine Zeit (t) bis zur Kollision mit dem Zielelement (61) ist; und
- Anpassen (12) einer Intensität eines durch das Augmented-Reality-Head-up-Display (41) darzustellenden Anzeigeelements (60), das an der Position des Zielelements (61) senkrecht zur Fahrbahn positioniert ist, in Abhängigkeit von dem zumindest einen sicherheitsrelevanten Parameter (P), wobei die Intensität mit abnehmender Distanz (d) des Fortbewegungsmittels (40) zum Zielelement (61) oder mit abnehmender Zeit (t) bis zur Kollision mit dem Zielelement (61) reduziert wird, **dadurch gekennzeichnet, dass** eine Opazität des Anzeigeelements (60) eingestellt wird und ein Flächenanteil des Anzeigeelements (60), der von Bildelementen (63) belegt ist, angepasst wird, wobei die dargestellten Anzeigeelemente auf Konturlinien reduziert werden.

2. Verfahren gemäß Anspruch 1, wobei eine Größe des Anzeigeelements (60) beim Anpassen (12) der Intensität berücksichtigt wird.

3. Verfahren gemäß Anspruch 1 oder 2, wobei sowohl die Distanz (d) des Fortbewegungsmittels (40) bis zum Zielelement (61) als auch die Zeit (t) bis zur Kollision mit dem Zielelement (61) bestimmt werden und der kritischere Parameter (P) für das Anpassen (12) der Intensität des Anzeigeelements (60) ausgewählt wird (11).

4. Verfahren gemäß einem der vorherigen Ansprüche, wobei die Intensität in Abhängigkeit von dem zumindest einen sicherheitsrelevanten Parameter (P) zwischen 100% und 0% einer nominellen Intensität anpassbar ist.

5. Verfahren gemäß einem der vorherigen Ansprüche, wobei die Intensität des Anzeigeelements (60) in Abhängigkeit von dem zumindest einen sicherheitsrelevanten Parameter (P) nur reduziert, aber nicht wieder angehoben wird.

6. Verfahren gemäß einem der vorherigen Ansprüche, wobei Konturlinien (62) des Anzeigeelements (60) unverändert sichtbar bleiben.

7. Verfahren gemäß einem der vorherigen Ansprüche, wobei Funktionen für das Anpassen (12) der Intensität des Anzeigeelements (60) anpassbar sind.

8. Verfahren gemäß einem der vorherigen Ansprüche, wobei das Anzeigeelement (60) ein Navigationshinweis oder ein Warnhinweis ist.

9. Verfahren gemäß einem der vorherigen Ansprüche, wobei das Zielelement (61) ein Hindernis oder eine Kreuzung ist.

10. Computerprogramm mit Instruktionen, die bei Ausführung durch einen Computer den Computer zur Ausführung der Schritte eines Verfahrens gemäß einem der Ansprüche 1 bis 9 zur Steuerung einer Anzeige eines Augmented-Reality-Head-up-Displays (41) für ein Fortbewegungsmittel (40) veranlassen.

11. Vorrichtung (20) zur Steuerung einer Anzeige eines Augmented-Reality-Head-up-Displays (41) für ein Fortbewegungsmittel (40), mit:
- einem Analysemodul (22) zum Bestimmen (10) zumindest eines sicherheitsrelevanten Parameters (P), wobei der zumindest eine sicherheitsrelevante Parameter (P) eine Distanz (d) des Fortbewegungsmittels (40) zu einem Zielelement (61) oder eine Zeit (t) bis zur Kollision mit dem Zielelement (61) ist; und
- einem Steuerungsmodul (23) zum Anpassen (12) einer Intensität eines durch das Augmented-Reality-Head-up-Display (41) darzustellenden Anzeigeelements (60), das an der Position des Zielelements (61) senkrecht zur Fahrbahn positioniert ist, in Abhängigkeit von dem zumindest einen sicherheitsrelevanten Parameter (P), wobei das Steuerungsmodul (23) eingerichtet ist, die Intensität mit abnehmender Distanz (d) des Fortbewegungsmittels (40) zum Zielelement (61) oder mit abnehmender Zeit (t) bis zur Kollision mit dem Zielelement (61) zu reduzieren, **dadurch gekennzeichnet, dass** es eine Opazität des Anzeigeelements (60) einstellt und einen Flächenanteil des Anzeigeelements (60), der von Bildelementen (63) belegt ist, anpasst, wobei es die dargestellten Anzeigeelemente auf Konturlinien reduziert.

12. Fortbewegungsmittel (40) mit einem Augmented-Reality-Head-up-Display (41), **dadurch gekennzeichnet, dass** das Fortbewegungsmittel (40) eine Vorrichtung (20) gemäß Anspruch 11 aufweist oder eingerichtet ist, ein Verfahren gemäß einem der Ansprüche 1 bis 9 zur Steuerung einer Anzeige des Augmented-Reality-Head-up-Displays (41) auszuführen.

## Claims

1. Method for controlling a display of an augmented-reality head-up display (41) for a means of transportation (40), comprising the steps of:
- determining (10) at least one safety-relevant parameter (P), wherein the at least one safety-relevant parameter (P) is a distance (d) of the means of transportation (40) from a target element (61) or a time (t) until collision with the target element (61); and
- adapting (12) an intensity of a display element (60), which is intended to be presented by the augmented-reality head-up display (41) and is positioned at the position of the target element (61) perpendicular to the road surface, in dependence on the at least one safety-relevant parameter (P), wherein the intensity is reduced as the distance (d) of the means of transportation (40) from the target element (61) decreases or the time (t) until collision with the target element (61) decreases, **characterized in that** an opacity of the display element (60) is set and a surface portion of the display element (60) occupied by image elements (63) is adapted, wherein the presented display elements are reduced to contour lines.

2. Method according to Claim 1, wherein a size of the display element (60) is taken into account when adapting (12) the intensity.

3. Method according to Claim 1 or 2, wherein both the distance (d) of the means of transportation (40) from the target element (61) and also the time (t) until collision with the target element (61) are determined and the more critical parameter (P) for the adaptation (12) of the intensity of the display element (60) is selected (11).

4. Method according to any of the preceding claims, wherein the intensity is adaptable between 100% and 0% of a nominal intensity in dependence on the at least one safety-relevant parameter (P).

5. Method according to any of the preceding claims, wherein the intensity of the display element (60) is only reduced in dependence on the at least one safety-relevant parameter (P), but not increased again.

6. Method according to any of the preceding claims, wherein contour lines (62) of the display element (60) remain unchangedly visible.

7. Method according to any of the preceding claims, wherein functions for the adaptation (12) of the intensity of the display element (60) are adaptable.

8. Method according to any of the preceding claims, wherein the display element (60) is a navigation message or a warning message.

9. Method according to any of the preceding claims, wherein the target element (61) is an obstacle or an intersection.

10. Computer program comprising instructions which, upon execution by a computer, cause the computer to perform the steps of a method according to any of Claims 1 to 9 for controlling a display of an augmented-reality head-up display (41) for a means of transportation (40).

11. Apparatus (20) for controlling a display of an augmented-reality head-up display (41) for a means of transportation (40), comprising:
- an analysis module (22) for determining (10) at least one safety-relevant parameter (P), wherein the at least one safety-relevant parameter (P) is a distance (d) of the means of transportation (40) from a target element (61) or a time (t) until collision with the target element (61); and
- a control module (23) for adapting (12) an intensity of a display element (60), which is intended to be presented by the augmented-reality head-up display (41) and is positioned at the position of the target element (61) perpendicular to the road surface, in dependence on the at least one safety-relevant parameter (P), wherein the control module (23) is configured to reduce the intensity as the distance (d) of the means of transportation (40) from the target element (61) decreases or the time (t) until collision with the target element (61) decreases, **characterized in that** it sets an opacity of the display element (60) and adapts a surface portion of the display element (60) occupied by image elements (63), wherein it reduces the presented display elements to contour lines.

12. Means of transportation (40) having an augmented-reality head-up display (41), **characterized in that** the means of transportation (40) has an apparatus (20) according to Claim 11 or is configured to carry out a method according to any of Claims 1 to 9 for controlling a display of the augmented-reality head-up display (41).

## Revendications

1. Procédé permettant de commander un affichage d'un dispositif d'affichage tête haute à réalité augmentée (41) pour un moyen de locomotion (40), comprenant les étapes consistant à :
- déterminer (10) au moins un paramètre (P) lié à la sécurité, dans lequel ledit au moins un paramètre (P) lié à la sécurité est une distance (d) entre le moyen de locomotion (40) et un élément cible (61) ou un délai (t) jusqu'à la collision avec l'élément cible (61) ; et
- adapter (12) une intensité d'un élément d'affichage (60) à représenter par le dispositif d'affichage tête haute à réalité augmentée (41) et qui est positionné perpendiculairement à la chaussée à la position de l'élément cible (61), en fonction dudit au moins un paramètre (P) lié à la sécurité, dans lequel l'intensité est réduite avec une distance (d) décroissante entre le moyen de locomotion (40) et l'élément cible (61) ou avec un délai (t) décroissant jusqu'à la collision avec l'élément cible (61),
**caractérisé en ce qu'**une opacité de l'élément d'affichage (60) est réglée et un pourcentage de la surface de l'élément d'affichage (60) qui est occupée par des éléments d'image (63) est adapté,
dans lequel les éléments d'affichage représentés sont réduits à des lignes de contour.

2. Procédé selon la revendication 1, dans lequel une taille de l'élément d'affichage (60) est prise en compte lors de l'adaptation (12) de l'intensité.

3. Procédé selon la revendication 1 ou 2, dans lequel à la fois la distance (d) entre le moyen de locomotion (40) et l'élément cible (61) et le délai (t) jusqu'à la collision avec l'élément cible (61) sont déterminés, et le paramètre (P) plus critique est sélectionné (11) pour l'adaptation (12) de l'intensité de l'élément d'affichage (60).

4. Procédé selon l'une quelconque des revendications précédentes, dans lequel l'intensité peut être adaptée entre 100 % et 0 % d'une intensité nominale en fonction dudit au moins un paramètre (P) lié à la sécurité.

5. Procédé selon l'une quelconque des revendications précédentes, dans lequel l'intensité de l'élément d'affichage (60) est seulement réduite mais pas augmentée à nouveau en fonction dudit au moins un paramètre (P) lié à la sécurité.

6. Procédé selon l'une quelconque des revendications précédentes, dans lequel des lignes de contour (62) de l'élément d'affichage (60) restent visibles de manière inchangée.

7. Procédé selon l'une quelconque des revendications précédentes, dans lequel des fonctions pour l'adaptation (12) de l'intensité de l'élément d'affichage (60) sont adaptables.

8. Procédé selon l'une quelconque des revendications précédentes, dans lequel l'élément d'affichage (60) est une instruction de navigation ou un avertissement.

9. Procédé selon l'une quelconque des revendications précédentes, dans lequel l'élément cible (61) est un obstacle ou une intersection.

10. Programme informatique comprenant des instructions qui, lorsqu'elles sont exécutées par un ordinateur, font que l'ordinateur exécute les étapes d'un procédé selon l'une quelconque des revendications 1 à 9 pour commande un affichage d'un dispositif d'affichage tête haute à réalité augmentée (41) pour un moyen de locomotion (40).

11. Dispositif (20) permettant de commander un affichage d'un dispositif d'affichage tête haute à réalité augmentée (41) pour un moyen de locomotion (40), comprenant :
- un module d'analyse (22) pour déterminer (10) au moins un paramètre (P) lié à la sécurité, dans lequel ledit au moins un paramètre (P) lié à la sécurité est une distance (d) entre le moyen de locomotion (40) et un élément cible (61) ou un délai (t) jusqu'à la collision avec l'élément cible (61) ; et
- un module de commande (23) pour adapter (12) une intensité d'un élément d'affichage (60) à représenter par le dispositif d'affichage tête haute à réalité augmentée (41) et qui est positionné perpendiculairement à la chaussée à la position de l'élément cible (61), en fonction dudit au moins un paramètre (P) lié à la sécurité, dans lequel le module de commande (23) est conçu pour réduire l'intensité avec une distance (d) décroissante entre le moyen de locomotion (40) et l'élément cible (61) ou avec un délai (t) décroissant jusqu'à la collision avec l'élément cible (61),
**caractérisé en ce qu'**il règle une opacité de l'élément d'affichage (60) et adapte un pourcentage de la surface de l'élément d'affichage (60) qui est occupée par des éléments d'image (63), dans lequel il réduit les éléments d'affichage représentés à des lignes de contour.

12. Moyen de locomotion (40), comprenant un dispositif d'affichage tête haute à réalité augmentée (41), **caractérisé en ce que** le moyen de locomotion (40) présente un dispositif (20) selon la revendication 11 ou est conçu pour exécuter un procédé selon l'une quelconque des revendications précédentes 1 à 9 pour commander un affichage du dispositif d'affichage tête haute à réalité augmentée (41).
